# EUROPEAN PATENT APPLICATION

(11) **EP 1 653 657 A1**
(43) Date of publication of application: **03.05.2006**
(21) Application number: 05109631.1
(22) Date of filing: 17.10.2005
(51) Int. Cl.: H04L 9/38, G09C 1/00, G07F 7/10

(54) **Table for encoding and decoding codes**

(30) Priority: 28.10.2004 ES 200402449 U
(71) Applicant: Alzamora LLiteras, Bartolomé, 07430 Llubi (ES)
(72) Inventor: Alzamora LLiteras, Bartolomé, 07430 Llubi (ES)
(74) Representative: Ponti Sales, Adelaida

(57) **Abstract**

It comprises a base element (5) with a series of characters arranged in a plurality of rows (2) and columns (3). The position of a row of characters (4'') and of a column of characters (4') is variable with respect to the other rows (2) and columns (3) of the base element (5), so that the coincidence of the position of a given character of said row (4'') and of a given character of said column (4') fixes their position, and allows defining the coordinates of the position of a character of the base element (5) from a character of the column (4') and from a character of the row (4''), and the combination of both characters being the encoding of the character of the base element (5).

## Description

The present invention relates to a table for encoding and decoding codes.

### BACKGROUND OF THE INVENTION

Presently, the introduction of new technologies in daily life involves the use of an increasing amount of secret and personal numbers for accessing different services and for carrying out different operations, such as bank operations, purchases, and many others, through the web or by any other way.

Owing to the above, it is getting increasingly difficult for the user to memorize all the desired or necessary secret numbers or codes.

To avoid having to memorize a large amount of codes, there are many people that use the same number or code for accessing to its personal accounts, or to access and guarantee the security in their operations.

Many of these codes can be changed by the user in order to enter a number or code which is easy to remember, but there are other codes which can not be changed, as, for example, the customer code of a bank, identification numbers of network connections, etc., and they are usually noted down, which affects on security.

One of the more usual cases, which reflects this problem, consists of the access passwords to internet, messenger, etc., where the server usually offers us the option to recover the password if we forget it, with the resulting waste of time and distrust of the security of the service, since if we can recover it there also exists the possibility that anyone can recover it.

### DESCRIPTION OF THE INVENTION

The aim of the present invention is to solve the aforementioned drawbacks, by providing a table for encoding and decoding codes which has the advantages which will be explained below.

According to this aim, there is provided a table for encoding and decoding codes, comprising a base element with a series of characters arranged in a plurality of rows and columns, characterized in that it comprises a row of characters, which position is variable with respect to the other rows of the base element, and a column of characters, which position is variable with respect to the other columns of the base element, so that the coincidence of the position of a given character of said row and of a given character of said column fixes their position, and allows defining the coordinates of the position of a character of the base element from a character of said column and from a character of said row, and the combination of both characters being the encoding of the character of the base element.

Thanks to these characteristics, the table for encoding and decoding codes of the present invention allows its users storing all their codes, secret numbers, passwords, phone numbers, identifications and any other code which has to be remembered, absolutely assuring their security and making it only necessary to decode them to memorize a simple combination of characters or symbols, for example, a letter and a number.

Preferably, the characters of said base element comprise letters and numbers.

Advantageously, the characters of the row which position is variable with respect to the other rows of the base element comprise numbers, and the characters of the column which position is variable with respect to the other columns of the base element comprise letters.

According to an embodiment of the invention, the characters of the row which position is variable with respect to the other rows of the base element comprise letters, and the characters of the column which position is variable with respect to the other columns of the base element comprise numbers.

According to another embodiment of the invention, the row of characters which position is variable with respect to the other rows of the base element is located at the central part of the base element, and in that the column of characters which position is variable with respect to the other columns of the base element is located at the left side of the element base.

Alternatively, the row of characters which position is variable with respect to the other rows of the base element and the column of characters which position is variable with respect to the other columns of the base element are located at the central part of the base element.

Thanks to these characteristics, the user only has to memorize a number and a letter to encode and decode any word or number.

According to an embodiment of the invention, the base element comprises a card, the row of characters which position is variable with respect to the other rows of the base element comprises a ruler which is longitudinally movable with respect to the rows of the card, and the column of characters which position is variable with respect to the other columns of the base element comprises a ruler which is longitudinally movable with respect to the columns of the card.

This embodiment allows manufacturing the table of the invention by means of a simple card and a pair of rulers fitted to it. The table can be made, for example, of cardboard, paper, or a sheet of plastic, so that it can be comfortably taken inside the pocket or the wallet. The user only has to move the rulers with his hands to situate them in the desired position. Preferably, the card may have a free space on its reverse to note down the encoding of the codes.

According to another embodiment of the invention, the base element comprises a tablet, the row of characters which position is variable with respect to the other rows of the base element comprises a ruler which is longitudinally movable with respect to the rows of the tablet, and the column of characters which position is variable with respect to the other columns of the base element comprises a slot in the tablet through which a column of characters which are arranged in rows and columns in a card located behind the tablet is shown, the movement of said card with respect to said tablet causing a variation in the position of the characters shown through the slot.

According to another embodiment, the base element comprises a tablet, the column of characters which position is variable with respect to the other columns of the base element comprises a ruler which is longitudinally movable with respect to the columns of the tablet, and the row of characters which position is variable with respect to the other rows of the base element comprises a slot in the tablet through which a row of characters which are arranged in rows and columns in a card located behind the tablet is shown, the movement of said card with respect to said tablet causing a variation in the position of the characters shown through the slot.

Preferably, the tablet comprises a window in which the character of the slot which is overlapped when its position coincides with the position of a character of the movable ruler is shown.

These two embodiments provide a smaller table, which is easier to use.

### BRIEF DESCRIPTION OF THE DRAWINGS

For a better understanding of all that has been outlined above, some drawings are attached which show, schematically and solely by way of non-restrictive example, some embodiments of the table of the invention, in which:
Figures 1 and 2 are two views which show a first embodiment and the operation of the table of the invention;

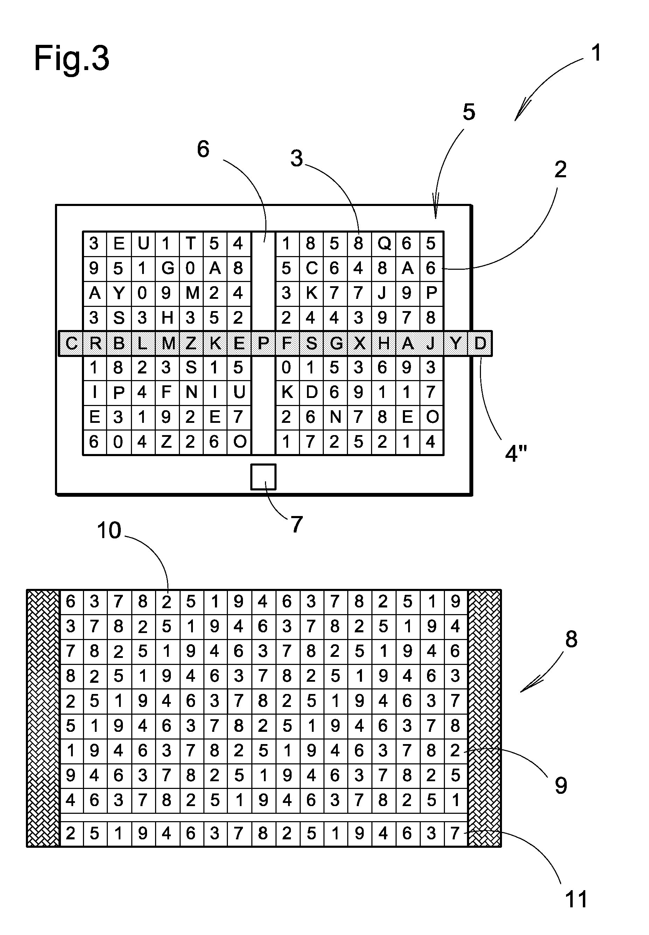

Figures 3, 4, 5 and 6 show a second embodiment and the operation of the table of the invention.

### DESCRIPTION OF A PREFERRED EMBODIMENT

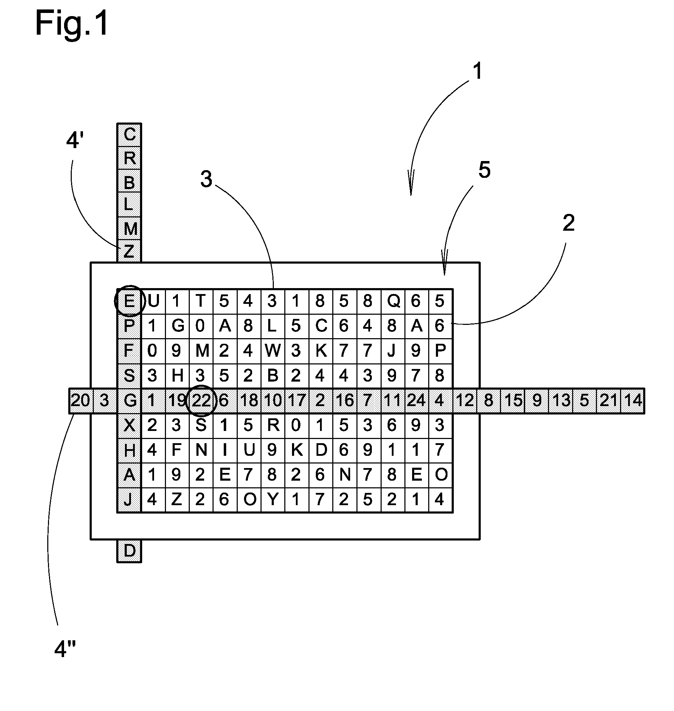

As shown in figure 1, the table 1 for encoding and decoding codes of the present invention comprises a base element 5 with a plurality of graphic characters properly arranged in eight rows 2 and thirteen columns 3, and a pair of rulers 4', 4" which are movable with respect to the base element 5, and perpendicularly to each other.

One of said rulers 4' is a column which is longitudinally movable with respect to the columns 3 of the base element 5 and which contains eighteen non-repeated letters, and it is positioned at the left side of said base element 5.

The other ruler 4" is a row which is movable with respect to the rows 2 of the base element 5, and which contains twenty four numbers from one to twenty four, and it is positioned at the central part of said base element 5. Said numbers are non-correlative.

In a preferred embodiment, the invention consists of a card with dimensions of 6 x 9 cm, which is the base element 5, combined with two movable rulers 4', 4", which are properly fitted to the card, and which are situated over the base element 5.

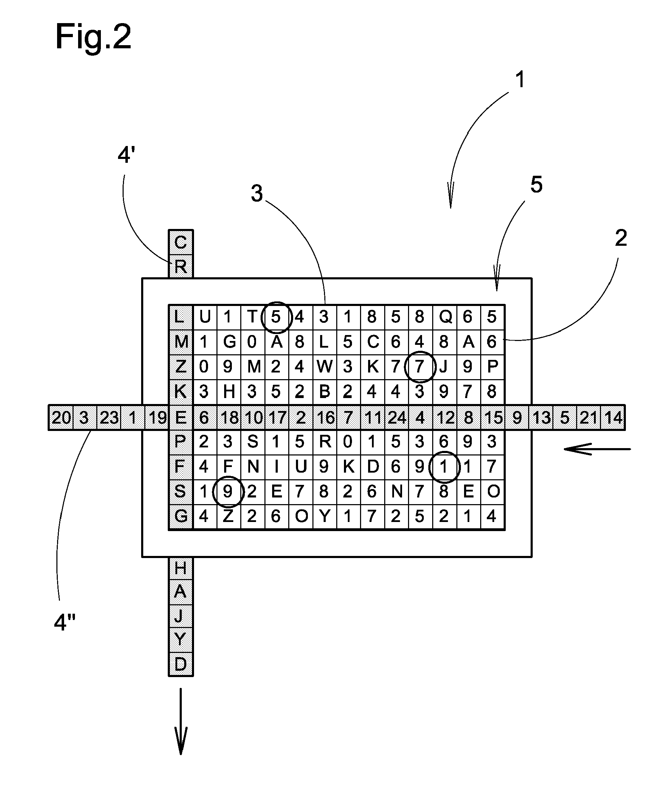

An example of the operation of the table 1 of the invention will be explained below, according to the previously described embodiment (figures 1 and 2).

A user wants to encode the secret number 5719.

The first step consists of choosing a combination of a character of the ruler 4' and another character of the ruler 4". Once it has been chosen, this combination has to be memorized by the user.

The user chooses, for example, the combination 'E-22' (marked in figure 1). Then, the user has to move the rulers 4', 4" so that the position of the letter 'E' of the ruler 4' and the number 22 of the ruler 4" coincides, and both characters are overlapped (figure 2).

With the rulers 4', 4" situated in the described position, the user has to look for the numbers that form his secret number in the base element 5 or card. The first number that the user has to look for is number 5. As it can be seen, the characters of the base element 5 can be repeated several times, in order to ease the user finding the desired character.

The user chooses number 5, marked in the figure. Subsequently, the user has to note down the characters of the rulers 4', 4" which define the coordinates of the character of the base element 5 which has been chosen. In this case, the coordinates are L-17. Thus, the number 5 is encoded as L17.

This step is repeated for the rest of the numbers of the secret number, which have also been marked in the figure.

The secret number 5719 is encoded as L17, Z4, F12, S18. The user can note down this code on the reverse of the card. After that, it is convenient to move the rulers again and leave them in a random position.

When the user wants to use the secret number, he only has to decode the noted code, by following the described method in inverse order. That is, the user moves the rulers 4', 4" again so that they intersect according to the memorized combination of characters (E-22), and obtains the numbers of the secret number from the coordinates which form the noted code, and which define the position of the respective characters of the base element 5.

As explained, the user can memorize a single combination (E-22) to encode and decode a large number of secret keys.

In case of loss or stealing of the card, it is almost impossible that the decoding key is found, as there is a large number of possibilities, and the only two characters that would allow decoding are in the user's mind.

Although in this embodiment the characters of the ruler 4' comprise letters and the characters of the ruler 4" comprise numbers, the table 1 also may be arranged inversely, that is, with a ruler 4' that comprises numbers and a ruler 4" that comprises letters.

On the other hand, although in the embodiment the ruler 4" is located at the left part of the base element 5, both rulers 4', 4" may be located through the central part of the base element 5 or at any other position.

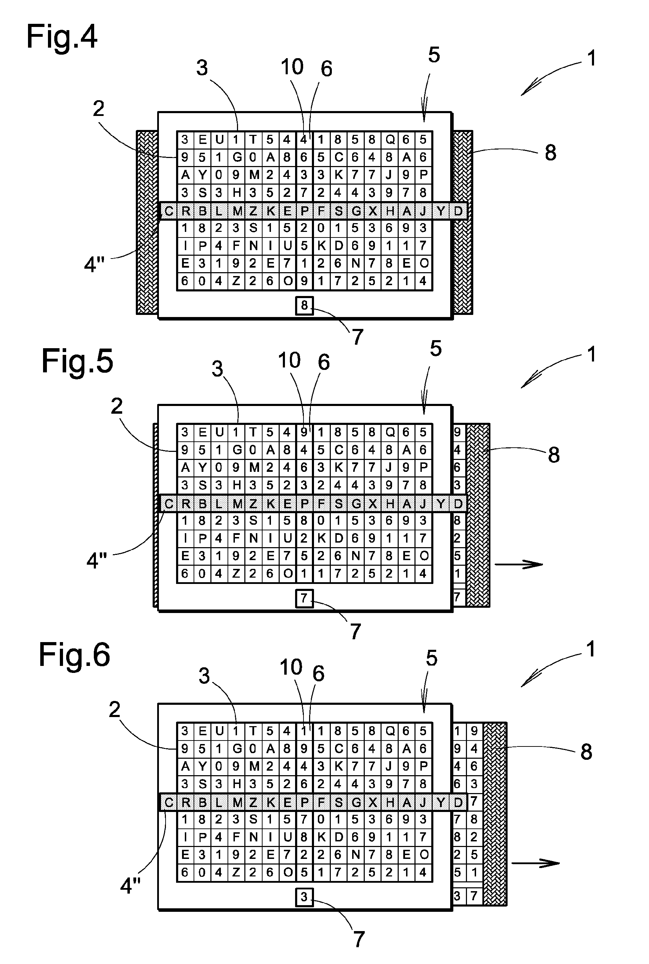

In figures 4 to 6 a further possible embodiment of the table 1 of the invention is described.

In this case, the table 1 also includes a base element 5 that would consist of a tablet or similar element, and a horizontal ruler 4" which is moved with respect to said base element 5.

The tablet 5 comprises a central vertical slot 6 and a window 7 located below said slot 6.

The table 1 also comprises a card 8 or plate which includes a plurality of characters arranged in rows 9 and columns 10. The card 8 also includes a row of characters 11 which function will be explained below.

Said card 8 is placed at the rear side of the tablet 5, for example, fitted inside a slot made for this purpose, so that it can be longitudinally moved with respect to the tablet 5, as shown in figures 4 to 6.

When the card 8 is placed behind the tablet 5, a column 10 of characters of the card 8 is situated inside the slot 6 of the tablet 5. The characters of the card 8, numbers in this case, are arranged in such a way that when the card 8 is moved laterally the characters of the column 10 which is shown through the slot vary their position.

If the card 8 is moved towards the right, the position of the characters of the column 10 of the slot 6 is moved downwards (figures 5 and 6) and if the card 8 is moved towards the left, the position of the characters of the column 10 of the slot 6 is moved upwards.

Therefore, the position of the characters of the column 10 of the slot 6 with respect to the characters of the columns 3 of the tablet 5 is easily changed, without having to use a ruler 4' like in the one of the previous embodiment.

In order to match the position of a character of the ruler 4" and of a character of the column 10 of the slot 6, it is only necessary to move the card 8 and the ruler 4" until both characters coincide.

In order to ease seeing the character of the column 10 of the card 8 which is overlapped by the character of the ruler 4" when their position coincides, there has been provided a window 7 in the tablet 5 through which one of the characters of the row 11 of the card 8 can be seen. The characters of this row 11 are the same that the characters of one of the rows 9 of the card 8 which is overlapped by the ruler 4". Thus, the character which is overlapped by one of the characters of the ruler 4" can be seen easily through the window 7. In figure 6, for example, the combination to be memorized would be P-3.

Encoding and decoding is carried out in the same way than in the previously described embodiment.

As it can be seen, the size of the table 1 of this embodiment is smaller, and it is more compact.

Obviously, in another embodiment, the slot 6 could be horizontal and form a row of the tablet 5, instead of a column, and the ruler could be a vertical column instead of a horizontal row of characters, and the card 8 would be moved vertically to vary the position of the characters shown in the slot.

Although the characters of the base element 5 and of the movable row 4' and column 4" of the shown embodiments consist of numbers and letters, said characters may be of any other type. Moreover, the number of rows and columns of the base element 5, the number of characters of the movable row 4' and column 4'', and the shape and arrangement of all the elements of the table 1 may be the more suitable.

For example, the table 1 may consist of a digitalized table 1 which is comprised in an electronic device, so that the user can use it in a computer or as an electronic address book or calculator.

## Claims

1. Table (1) for encoding and decoding codes, comprising a base element (5) with a series of characters arranged in a plurality of rows (2) and columns (3), **characterized in that** it comprises a row of characters (4''), which position is variable with respect to the other rows (2) of the base element (5), and a column of characters (4'), which position is variable with respect to the other columns (3) of the base element (5), so that the coincidence of the position of a given character of said row (4' ') and of a given character of said column (4') fixes their position, and allows defining the coordinates of the position of a character of the base element (5) from a character of said column (4') and from a character of said row (4"), and the combination of both characters being the encoding of the character of the base element (5).

2. Table (1), according to claim 1, **characterized in that** said the characters of said base element (5) comprise letters and numbers.

3. Table (1), according to claim 2, **characterized in that** the characters of the row (4") which position is variable with respect to the other rows (2) of the base element (5) comprise numbers, and the characters of the column (4') which position is variable with respect to the other columns (3) of the base element (5) comprise letters.

4. Table (1), according to claim 2, **characterized in that** the characters of the row (4") which position is variable with respect to the other rows (2) of the base element (5) comprise letters, and the characters of the column (4') which position is variable with respect to the other columns (3) of the base element (5) comprise numbers.

5. Table (1), according to any of claims 1 to 4, **characterized in that** the row of characters (4") which position is variable with respect to the other rows (2) of the base element (5) is located at the central part of the base element (5), and **in that** the column of characters (4') which position is variable with respect to the other columns (3) of the base element (5) is located at the left side of the element base (5).

6. Table (1), according to any of claims 1 to 4, **characterized in that** the row of characters (4") which position is variable with respect to the other rows (2) of the base element (5) and the column of characters (4') which position is variable with respect to the other columns (3) of the base element (5) are located at the central part of the base element (5).

7. Table (1), according to any of claims 1 to 6, **characterized in that** the base element (5) comprises a card, the row of characters (4") which position is variable with respect to the other rows (2) of the base element (5) comprises a ruler which is longitudinally movable with respect to the rows (2) of the card, and the column of characters (4') which position is variable with respect to the other columns (3) of the base element (5) comprises a ruler which is longitudinally movable with respect to the columns (3) of the card.

8. Table (1), according to any of claims 1 to 6, **characterized in that** the base element (5) comprises a tablet, the row of characters (4") which position is variable with respect to the other rows (2) of the base element (5) comprises a ruler which is longitudinally movable with respect to the rows (2) of the tablet, and the column of characters which position is variable with respect to the other columns (3) of the base element (5) comprises a slot (6) in the tablet through which a column (10) of characters which are arranged in rows (9) and columns (10) in a card (8) located behind the tablet is shown, the movement of said card (9) with respect to said tablet causing a variation of the position of the characters shown through the slot (6).

9. Table (1), according to any of claims 1 to 6, **characterized in that** the base element (5) comprises a tablet, the column of characters which position is variable with respect to the other columns (3) of the base element (5) comprises a ruler which is longitudinally movable with respect to the columns (3) of the tablet, and the row of characters which position is variable with respect to the other rows (2) of the base element (5) comprises a slot in the tablet through which a row of characters which are arranged in rows and columns in a card located behind the tablet is shown, the movement of said card with respect to said tablet causing a variation of the position of the characters shown through the slot.

10. Table (1), according to claims 8 or 9, **characterized in that** the tablet comprises a window (7) in which the character of the slot (6) which is overlapped when its position coincides with the position of a character of the movable ruler (4") is shown.
